Europäisches Patentamt

European Patent Office

Office européen des brevets

(11) Veröffentlichungsnummer: **0 297 494**
A1

# (12) EUROPÄISCHE PATENTANMELDUNG

(21) Anmeldenummer: **88110258.6**

(22) Anmeldetag: **28.06.88**

(51) Int. Cl.⁴: **B65G 67/06**

(30) Priorität: **01.07.87 DE 3721672**

(43) Veröffentlichungstag der Anmeldung:
**04.01.89 Patentblatt 89/01**

(84) Benannte Vertragsstaaten:
**AT BE CH ES FR GB GR IT LI LU NL SE**

(71) Anmelder:
**INNOPLAN-INGENIEURGESELLSCHAFT
BRAAS UND CO MBH
Kennedyallee 89
D-6000 Frankfurt am Main 70(DE)**

(72) Erfinder: **Heschek, Edmund Dipl.-Ing.
Ottersfuhrstrasse 9
D-6050 Offenbach(DE)**
Erfinder: **Ebert, Helmut Dipl.-Ing.
Am Bienengarten 6 A
D-6074 Rödermark(DE)**

(74) Vertreter: **Meier, Robert, Dipl.-Ing.
Patentanwalt Dipl.-Ing. Robert Meier Auf dem
Mühlberg 16
D-6000 Frankfurt am Main 70(DE)**

(54) **Beladevorrichtung für Container.**

(57) Bei einer an einen Auslauftrichter (1) eines Silos anflanschbaren Beladevorrichtung für Container (72), Tankwagen oder andere Behälter mit einem Rohrschieber (33) wird als Führung für diesen der Innenmantel (14) eines am Auslauftrichter (1) befestigten doppelwandigen Schüttrohres verwendet. Die Beladevorrichtung ist unterhalb dieses Auslauftrichters (1) angeordnet. Durch eine Betätigungsvorrichtung kann der Rohrschieber (33) außer in der Schließstellung (53) und in der Schüttstellung (54) zusätzlich noch in einer Spülstellung (55) arretiert werden. Das unter Ende des Rohrschiebers (33) ist als Öffner für eine unter der Wirkung einer Feder (79) verschließbare Absperrplatte (80) einer Einfüllöffnung (73) des Containers (72) o.dgl. ausgebildet.

Fig. 1

## Beladevorrichtung für Container

Die Erfindung bezieht sich auf eine an einen Auslauftrichter eines Silos o.dgl. anflanschbare Beladeeinrichtung für Container, Tankwagen oder andere Behälter mit einem Rohrschieber, der innerhalb einer Führung von einer Betätigungsvorrichtung in einer den Materialfluß sperrenden Schließstellung und einer den Materialfluß freigebenden Schüttstellung arretierbar ist.

Beladevorrichtungen werden außer zur Beladung von Silos o.dgl. mit Schüttgütern zudem zur Erfüllung unterschiedlicher anderer Aufgaben eingesetzt.

In einem bekannten Fall wird beispielsweise ein Beladekopf verwendet, der aus einem senkrecht angeordneten Teleskopfüllrohr mit einem an dessen unterer Auslaßöffnung vorgesehenen, an einem Hub- und Betätigungsseil hängenden Verschlußkegel und einem im geschlossenen Zustand sowohl den unteren Teil des Teleskopfüllrohres als auch den Verschlußkegel umgebenden, in die Einfüllöffnung eines Silos oder eines Silofahrzeuges einsteckbaren Beladekonus besteht (DE-GM 70 33 250).

Das Zugseil oder die Zugkette ist an der Spitze des Verschlußkegels befestigt. Beim Nachlassen des Zugseiles bzw. der Zugkette entfernt sich nicht etwa der Verschlußkegel aus der unteren Öffnung des Teleskoprohres, sondern die gesamte Anordnung, zu der nicht nur das Teleskoprohr und der Beladekonus, sondern auch ein Absaugstutzen und ein Faltenbalg gehören, die auf der Mantelfläche des Verschlußkegels aufsitzt, wird abgesenkt, bis sich der in die Einfüllöffnung eines Silos oder eines Silofahrzeuges eingesteckte Beladekonus gegen die Ränder der Einfüllöffnung abstützt. Dann erst tritt der Verschlußkegel aus seiner Schließstellung im Teleskoprohrende aus und gibt dadurch den Weg für das Schüttgut in den Silo frei.

Dieser Beladekopf führt leicht zu ungenauen Beladungen, wenn der Federweg des Silofahrzeuges infolge der aufgenommenen Last geringer wird und sich infolge dessen auch der in der Einfüllöffnung aufliegende Beladekopf weiter nach unten absenkt, während die Stellung des Verschlußkegels unverändert bleibt. Um zu verhindern, daß infolge dieser Eigenart größere Mengen Schüttgut als gewünscht in den Silo eingespeist werden, muß ein Sichtanzeigegerät verwendet werden, mit dessen Hilfe die gesamte Stellung des Verschlußkegels erkennbar und einjustierbar wird.

Bekannt geworden ist weiterhin eine Verladegarnitur mit Innenteleskop und einem oberen, mittigen Zentrierrohr, das bei zusammengeschobenem Innenteleskop von den einzelnen Teleskoprohren konzentrisch umschlossen ist. Die Verladegarnitur ist ein Teil einer Schüttgutfördereinrichtung, der das Schüttgut von einem Silo zugeführt wird und dann längs einer geraden Strecke verfahren werden kann. Von der Verladegarnitur wird das Schüttgut in einen Transportbehälter eines Kraftfahrzeuges o.dgl. eingeführt. Um mit einer solchen Verladegarnitur die Aufgabe erfüllen zu können, bei einer ausreichenden Steifigkeit der Verladegarnitur beim Verfahren in Fahrtrichtung diese auch quer dazu bewegen zu können, ist ein am unteren Ende des Zentrierrohres konzentrisch zum Zentrierungsrohr angeordnete, um eine in Fahrtrichtung der Verladegarnitur sich erstreckende Achse verschwenkbar gelagerter Tragring vorgesehen, an dessen nach außen sich erstreckenden Auslegern sich das Innenteleskop in der ausgefahrenen Stellung abstützt (DE-PS 28 21 210).

Diese Beladegarnitur besteht aus zahlreichen Einzelteilen, die dem Verschleiß unterliegen, und die ihren Zweck nur in Verbindung mit Verladegarnituren erfüllen, die längs einer Strecke verfahren werden sollen.

Wo dieses nicht notwendig ist, sondern exakt an einen Ort verfahrbare Kübel-oder Behälterwagen, beispielsweise mit staubhaltigem Schüttgut aus Bunkern beladen werden sollen, kann eine Vorrichtung zum Einsatz kommen, deren wesentliches Merkmal darin besteht, daß an dem Bunker mehrere Ausläufe angeordnet sind, die nach Anzahl und in der Anordnung den Füllstutzen des zu beladenden Wagens entsprechen, und deren jeder mit einem Verschluß und mit einem Teleskoprohr versehen ist, daß am unteren Ende mit einer den Füllstutzen des Wagens überdeckenden Platte ausgestattet ist. Ein weiteres wesentliches Merkmal dieser Einrichtung ist, daß die Platte am unteren Ende des Teleskoprohres höhenverschiebbar und mit kugelbeweglichem Drucksitz angeordnet ist, und daß das Teleskoprohr doppelwandig ausgeführt ist, wobei der Ringraum zwischen den beiden Wandungen des Teleskoprohres durch eine Luftleitung mit dem oberhalb des Schüttgutes befindlichen freien Raum des Bunkers verbunden ist. In der Luftleitung soll ein Absperrorgan eingebaut sein, das mit dem Bunkerverschluß derart verbunden ist, daß es zugleich mit diesem geöffnet und geschlossen wird. Ferner soll das Teleskoprohr mit den Kolben von zwei Druckluftzylindern verbunden sein und auch für die Betätigung des Bunkerverschlusses ein Druckluftzylinder vorgesehen sein.

Ein wesentlicher Nachteil ist, daß jeder Auslauf des Bunkers durch einen eigenen pneumatisch zu betätigenden Verschluß geschlossen und geöffnet werden muß. Hierdurch ist eine außerordentlich aufwendige Steuervorrichtung erforderlich. Hinzu kommt, daß die Einfüllstutzen der Wagen bzw. der Behälter vor der Beladung geöffnet sein müssen (DPS 838 720).

Eine Vereinfachung derartiger Beladevorrichtungen für Container, Tankwagen oder andere Behälter, die vor ihrer Befüllung genau unterhalb des Bunkers verfahren werden können, erreicht man mit einem sog. Senderventil QKFQ der Fa. Bühler-Miag, welches mit einem Rohrschieber, der innerhalb einer Führung von einer Betätigungsvorrichtung in einer den Materialfluß sperrenden Schließstellung und einer den Materialfluß freigebenden Schüttstellung arretierbar ist. Der Rohrschieber steht mit der Kolbenstange eines pneumatisch bzw. hydraulisch betriebenen Zylinders in Wirkverbindung, durch den er in der Führung am unteren Ende eines Bunkerauslauftrichters verschiebbar ist. In seiner oberen Sperrstellung verschließt der Rohrschieber den Bunkerauslauf, wohingegen er in seiner unteren Stellung einen Ringschlitz freigibt, durch den das Schüttgut in den Rohrschieber gelangen kann, dessen unteres Ende in die Einfüllöffnung des zu beladenden Behälters hineinragt.

Nachteilig ist, daß der Arbeitszylinder innerhalb des Auslauftrichters sitzt. Bei Feinststäuben ist der Auslauf aus dem Auslauftrichter problematisch. Feinststäube neigen zu Brückenbildungen. Bei dem Senderventil wird nun die problematische Stelle des Bunkerauslaufes durch den Arbeitszylinder zusätzlich beeinträchtigt. Hinzu kommt, daß die Luft- bzw. Hydraulikleitungen durch den Auslauftrichter hindurchgeführt und an den Arbeitszylinder angeschlossen werden müssen. Hierdurch wird die Gefahr erhöht, daß das staubförmige Schüttgut durch Hydrauliköl oder auch das pneumatische Medium verschmutzt werden kann. Hinzu kommt aber auch, daß infolge der Anordnung des Arbeitszylinders innerhalb des Auslauftrichters der Ausflußquerschnitt durch den Ringschlitz relativ gering ist. Die Beladeleistung läßt sich infolge dessen nicht über ein relativ geringen Betrag hinaus erhöhen. Eine Eigenart des Senderventils ist es weiterhin, daß es nur in Verbindung mit einem vorher geöffneten Container-Einfüllstutzen zusammenarbeiten kann.

Dem gegenüber liegt der vorliegenden Erfindung die Aufgabe zugrunde, eine Beladevorrichtung für Container, Tankwagen und andere Behälter der eingangs geschilderten Art zu schaffen, durch die nicht nur die Beladeleistung erhöht und ein Verschmutzen des staubförmigen Schüttgutes vermieden werden kann, sondern durch die auch eine relativ einfache Abdichtung zwischen der Beladevorrichtung und dem Einfüllstutzen möglich wird. Darüber hinaus sollte eine Beladevorrichtung geschaffen werden, die einen vollautomatischen Beladebetrieb ermöglicht, bei dem es nicht notwendig ist, den Einfüllstutzen des zu beladenden Containers o.dgl. vor der Beladung zu öffnen.

Mit der Erfindung läßt sich diese Aufgabe in einfacher Weise dadurch lösen, daß die Beladevorrichtung unterhalb des Auslauftrichters angeordnet ist, daß als Führung für den Rohrschieber der Innenmantel eines am Auslauftrichter befestigten doppelwandigen Schüttrohres verwendet wird, daß durch die Betätigungsvorrichtung der Rohrschieber außer in der Schließstellung und in der Schüttstellung zusätzlich noch in einer Spülstellung arretierbar ist, und daß das untere Ende des Rohrschiebers als Öffner für eine unter der Wirkung einer Feder verschließbare Absperrplatte einer Einfüllöffnung des Containers o.dgl. ausgebildet ist.

Dadurch, daß die Beladevorrichtung unterhalb des Auslauftrichters angeordnet ist, ist sie leicht zu montieren bzw. zu demontieren. Der untere Bereich des Auslauftrichters braucht lediglich als Anschlußflansch ausgebildet zu sein, an welchen die erfindungsgemäße Beladevorrichtung angeflanscht werden muß.

Ein weiterer Vorteil dieser Anordnung unterhalb des Auslauftrichters besteht darin, daß der Auslaufvorgang innerhalb des Auslauftrichters nicht gestört wird. Der untere Bereich des Auslauftrichters braucht zudem nicht als Führung für den Rohrschieber ausgebildet zu werden. Der Ringraum des doppelwandigen Schüttrohres wird voll für den Materialauslauf verwendet. Das gesamte Innenrohr des doppelwandigen Schüttrohres dient dem Rohrschieber als Führung.

Ein weiterer Vorteil gegenüber dem Stand der Technik ergibt sich dadurch, daß durch die Betätigungsvorrichtung der Rohrschieber zusätzlich auch in einer Spülstellung arretierbar ist. In dieser Spülstellung ist der Materialzulauf aus dem Bunker in den Container gesperrt, wohingegen die innerhalb des zu beladenden Containers vorhandene Spülluft oder das Spülgas durch die Beladevorrichtung entweichen kann.

Von besonderem Vorteil ist, daß das untere Ende des Rohrschiebers als Öffner für die Einfüllöffnung des zu beladenden Containers dient. Dieses wird durch eine besondere Ausbildung dieser Einfüllöffnung erreicht, die eine unter der Wirkung einer Feder verschließbare Absperrplatte einschließt. Normalerweise ist die Absperrplatte durch die Feder in die Schließstellung gepreßt.

Einzelheiten der Erfindung lassen sich den Unteransprüchen 2 bis 24 entnehmen.

Der Schüttkanal der erfindungsgemäßen Beladevorrichtung wird durch den Ringraum gebildet, der zwischen dem Außenmantel und dem Innenmantel des doppelwandigen Schüttrohres verläuft. Sein Durchflußquerschnitt ist definiert durch obere und untere Abstandsstreben zwischen Innenmantel und Außenmantel. Durch die Ausbildung des Schüttkanals werden Teleskoprohre entbehrlich.

Der Schüttkanal hat eine feste Länge unterhalb des Auslauftrichters und da die zu beladenden Behälter bzw. Container beispielsweise auf Schienen unter die Beladevorrichtung geschoben und dort in Beladeposition arretiert werden, ist dafür Sorge getragen, daß der Abstand zwischen dem doppelwandigen Schüttrohr und der Einfüllöffnung des Containers auch dann gleichbleibt, wenn sich das Gewicht des Containers durch das Schütt gut maximal erhöht hat.

An den Außenmantel des doppelwandigen Schüttrohres schließt sich ein Schütt-Trichter an, dessen unterer Rand den gleichen Innendurchmesser wie der Innenmantel des doppelwandigen Schüttrohres aufweist. Der untere Rand des Schütt-Trichters ist um die Breite eines Ringschlitzes vom unteren Rand des Innenmantels des doppelwandigen Schüttrohres entfernt. Dieser Ringschlitz ist in der oberen Position des Rohrschiebers verschlossen und wird in der unteren Schüttposition des Rohrschiebers freigegeben, so daß das Schüttgut aus dem Schüttkanal durch das Innere des Rohrschiebers in die Einfüllöffnung des zu befüllenden Containers gelangen kann.

An den unteren Rand des Schütt-Trichters ist über einen Außenflansch eine Spülkammer mit einem zylinderförmigen Außenmantel angeflanscht. Um den Außenmantel herum ist ein Haltering für einen aufblasbaren Dichtungsring befestigt. Dieser Dichtungsring ist groß genug um zwischen der Beladevorrichtung und der Einfüllöffnung des Containers eine staubdichte Abdichtung zu bewirken, ohne daß dazu die Beladevorrichtung selbst in axialer Richtung bewegt zu werden braucht.

Der obere Bereich des Innenmantels des doppelwandigen Schüttrohres ist durch eine dachförmige Abdeckung staubdicht verschlossen. Der am Innenmantel des doppelwandigen Schüttrohres gleitende Rohrschieber ist mittels Abstandsstreben an einem Betätigungsrohr befestigt, an welchem oberhalb des Rohrschiebers ein ebenfalls am Innenmantel gleitender Kolben mit Kolbenringdichtung befestigt ist. Mittels eines Gelenkes ist das obere Ende des Betätigungsrohres mittels einer Traverse, die durch im doppelwandigen Schüttrohr einander gegenüberliegende Durchtrittsöffnungen in den Innen-und Außenmänteln hindurchragen, gelenkig an die Kolbenstangen von Zylindern angeschlossen. Durch Betätigung dieser Zylinder kann der Rohrschieber innerhalb des doppelwandigen Schüttrohres auf- und abbewegt und in drei Positionen, Sperrstellung, Schüttstellung und Spülstellung arretiert werden.

Am unteren Rand des Rohrschiebers ist ein äußerer Kegelstumpfmantel und am Ende des Betätigungsrohres ein innerer Kegelstumpfmantel angeordnet, deren Außenränder am Außenmantel der Spülkammer anliegen. Durch diesen Ringtrich ter gelangt das Schüttgut in der Schüttposition in das Innere des Containers.

Im unteren Bereich des inneren Kegelstumpfmantels ist wenigstens eine Querstrebe vorgesehen, die in der Schüttstellung und in der Spülstellung der Beladevorrichtung an der Absperrplatte der Einfüllöffnung anliegt und diese gegen die Kraft einer Feder öffnet.

Die besondere Ausbildung der Einfüllöffnung des Containers ist in den Ansprüchen 22 bis 24 gekennzeichnet. Von besonderer Bedeutung ist, daß bei der Beladung des Containers die Schüttstellung der Beladevorrichtung eine Entlüftung des Containers durch die Einfüllöffnung, die Spülkammer und durch ein Entlüftungsrohr ermöglicht.

Es hat sich herausgestellt, daß die Beladevorrichtung nach der Erfindung dann von besonderem Vorteil ist, wenn mehrere Container, beispielsweise nach der Patentanmeldung P 37 14 396.4, automatisch beladen werden sollen. Ohne Schwierigkeiten können die Container auf Schienen unterhalb des Bunkers in Position verbracht und arretiert werden. Die richtige Position wird durch Rückmeldung an die Zentrale durchgegeben. Durch die Rückmeldung kann das automatische Beladen des Containers durch die Beladevorrichtung ausgelöst werden. Zunächst wird dabei der Dichtring aufgeblasen, der eine staubdichte Abdichtung zwischen Beladevorrichtung und Einfüllöffnung des Containers bewirkt. Diese staubdichte Abdichtung sichert zudem, daß das oft empfindliche Schüttgut nicht mit der Feuchtigkeit oder dem Sauerstoff der Außenluft in Kontakt kommt.

Nach der Abdichtung werden die Zylinder aktiviert, die Rohrschieber absenken, ohne daß dadurch die Abdichtung beeinflußt wird. Hierbei wird der Rohrschieber abgesenkt, der die Einfüllöffnung des Containers öffnet und zugleich den Materialfluß durch den Rohrschieber und den Ringkegel freigibt. Zugleich wird die Entlüftung des Containers über die Spülkammer und das Entlüftungsrohr freigegeben. Die Beladung kann durch eine Waage überwacht werden, die rechtzeitig vor Erreichen des Sollgewichtes die Beladevorrichtung in ihre obere Position zurückführt, in welcher der Materialfluß gestoppt und die Füllöffnung wieder verschlossen ist. Anschließend wird dann durch Ablassen der Luft aus dem Dichtungsring die Dichtung zwischen der Beladevorrichtung und der Einfüllöffnung aufgehoben.

Vor der Beladung kann in der Spülstellung des Rohrschiebers bei abgesperrtem Materialfluß eine Spülung des Containers mit Luft oder Inertgas durchgeführt werden. Das Spülgas entweicht anschließend - meist bei der Beladung des Containers - durch die Spülkammer und das Entlüftungsrohr.

Ein Ausführungsbeispiel der Erfindung wird nachfolgend anhang der Zeichnung erläutert.

Es zeigt:

Fig. 1 einen Längsschnitt durch die Beladevorrichtung entlang der Linie I/I in Fig. 3, wobei rechts die Schließstellung und links die Schüttstellung dargestellt ist,

Fig. 2 einen Schnitt durch die Beladevorrichtung entlang der Linie II/II in Fig. 3, wobei rechts die Schließstellung und links die Schüttstellung dargestellt ist,

Fig. 3 eine Draufsicht auf die Beladevorrichtung entlang der Linie III/III in den Fig. 1, 2 und 4,

Fig. 4 einen Längsschnitt durch die Beladevorrichtung entlang der Linie I/I in Fig. 3 in Spülstellung der Beladevorrichtung.

Unterhalb eines nur angedeuteten Auslauftrichters 1 unterhalb eines Bunkers ist eine allgemein mit 2 bezeichnete Beladevorrichtung angeordnet. Im dargestellten Ausführungsbeispiel ist am Auslauftrichter ein nicht bezeichneter Endflansch angeordnet, der mittels Schrauben 6 mit einem oberen Abschlußflansch 5 der Beladevorrichtung 2 verbunden ist.

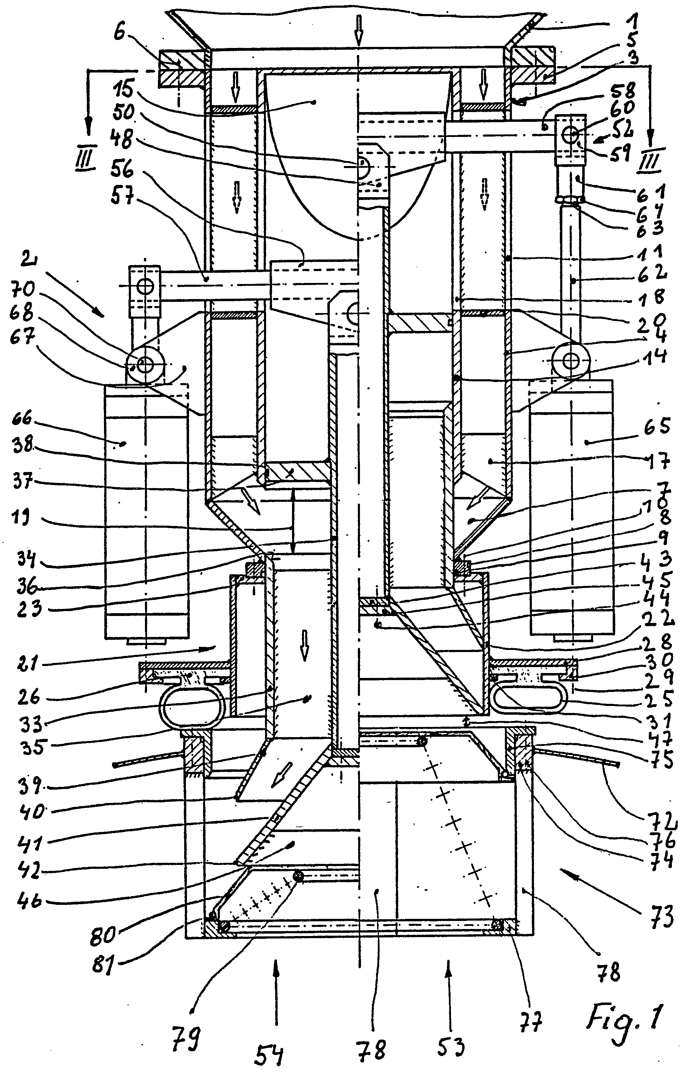

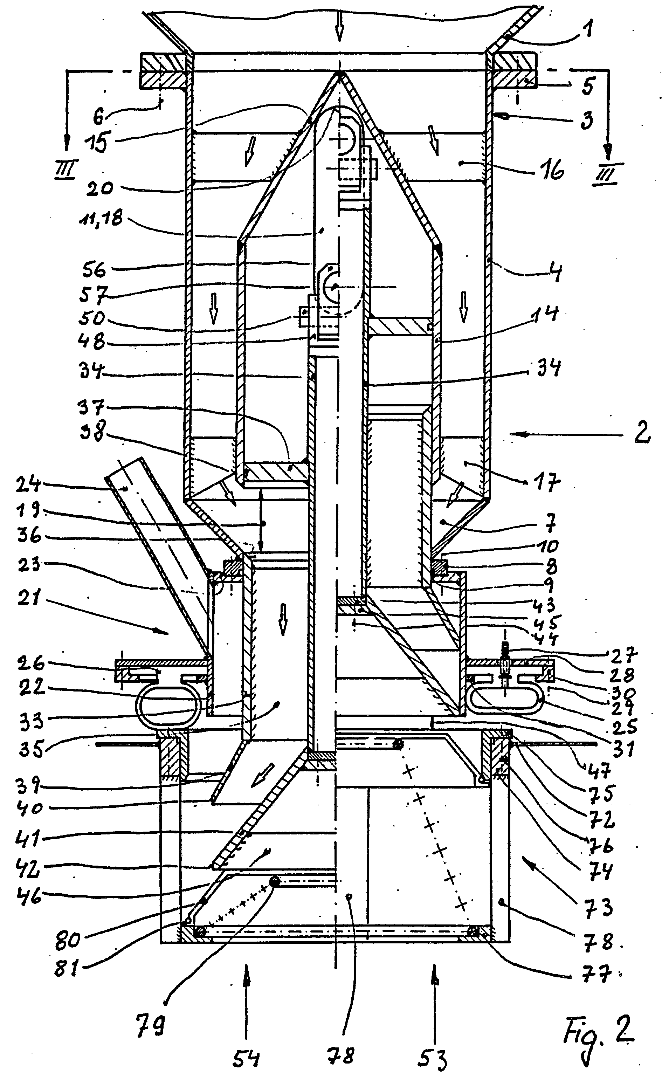

Die Beladevorrichtung schließt ein doppelwandiges Schüttrohr 3 mit einem Außenmantel 4 und einem Innenmantel 14 ein. Der Ringraum zwischen Außenmantel 4 und Innenmantel 14 ist als Schüttkanal bezeichnet. Der Durchflußquerschnitt dieses Schüttkanals des doppelwandigen Schüttrohres 3 ist durch obere und untere Abstandsstreben 16 und 17 definiert, die zwischen beiden Mänteln angeordnet sind. Im dargestellten Ausführungsbeispiel sind, wie ein Vergleich der Fig. 1 und 2 ergibt, vier obere Abstandsstreben 16 und vier untere Abstandsstreben 17 vorgesehen. Ohne am Kern der Erfindung etwas zu ändern, kann die Anzahl der Abstandsstreben erhöht bzw. verringert werden.

An den Außenmantel 4 des doppelwandigen Schüttrohres 3 schließt ein Schütt-Trichter 7 an. Sein unterer Rand hat den gleichen Durchmesser wie der Innenmantel 14 des doppelwandigen Schüttrohres 3. Der untere Rand des Schüttkegels ist vom unteren Rand des Innenmantels 14 um die Breite eines Ringschlitzes 19 entfernt. Je nach Neigung des Schüttkegels läßt sich der Ringschlitz 19 erweitern oder verringern.

Um den unteren Rand des Schüttkegels 7 herum ist ein unterer Anschlußflansch 8 angeschweißt, dessen Innenmantel glatt in den unteren Rand des Schüttkegels 7 übergeht. Mittels Schrauben 10 ist an den unteren Schlußflansch eine Spülkammer 21 angeflanscht, die aus einem Anschlußring 23 und aus einem Außenmantel 22 besteht, und deren Bedeutung später erläutert wird.

Fig. 2 läßt erkennen, daß an die Spülkammer 21 ein Entlüftungsrohr 24 angeschlossen ist. Um den Außenmantel 22 der Spülkammer 21 herum ist ein Haltering 28 angeordnet, der einen aufblasbaren und über ein Ventil 27 entleerbaren Dichtungsring 25 trägt. Im einzelnen weist der aufblasbare Dichtungsring einen Haltering 26 auf, dessen obere Ringfläche plan an der unteren Ringfläche des Halteringes 28 anliegt. Um einen sicheren Sitz des aufblasbaren Dichtungsringes 25 zu ermöglichen, ist um den Außenmantel 22 der Spülkammer 21 herum ein innerer Haltering 31 befestigt und am äußeren Rand des Halteringes 28 ein äußerer Haltering 30 festgeschraubt. Hierdurch wird der Haltering 26 des aufblasbaren Dichtungsringes sicher gehalten. Im Haltering 28 ist eine Öffnung für ein Ventil 27 vorgesehen. Über nicht dargestellte Mittel ist der aufblasbare Dichtungsring 25 aufblasbar und über das Ventil 27 entleerbar. Anstelle mit Schrauben 29 kann der äußere Haltering 30 auch anders am Haltering 28 befestigt sein.

Die Fig. 1 und 2 lassen erkennen, daß durch Aufblasen des aufblasbaren Dichtungsringes 25 eine Abdichtung zwischen der Beladevorrichtung 2 und der darunterliegenden Einfüllöffnung 73 eines Containers 72 ermöglicht wird, ohne daß die Beladevorrichtung 2 selbst in axialer Richtung bewegt zu werden braucht. Da die zu beladenden Container auf nicht dargestellten festen Unterlagen aufstehen, findet auch keine Absenkung der Container während des Beladevorganges statt. Die Abdichtung mittels des aufblasbaren Dichtungsringes 25 hält daher sicher während des ganzen Beladevorganges und auch des später erläuterten Spülvorganges vor.

Fig. 1 läßt in Seitenansicht und Fig. 2 im Querschnitt eine dachförmige Abdeckung 15 erkennen, die auf dem oberen Bereich des Innenmantels 14 des doppelwandigen Schüttrohres 3 sitzt und das Innere des Innenmantels staubdicht verschließt. Die Dachkante dieser dachförmigen Abdeckung 15 liegt in der oder unterhalb der Anschlußebene des oberen Anschlußflansches 5 am doppelwandigen Schüttgut 3. Hierdurch wird einerseits der Innenraum des Innenmantels 14 staubdicht verschlossen, und andererseits die Abmessung der Beladevorrichtung 2 so eingehalten, daß nach oben kein Konstruktionsteil störend herausragt.

Innerhalb des Innenmantels 14 gleitet ein Rohrschieber 33, welcher mittels Abstandsstreben 35 mit einem zentralen Betätigungsrohr 34 in Wirkverbindung steht. Ein Vergleich der Fig. 1 und 2 läßt erkennen, daß im dargestellten Ausführungsbeispiel vier Abstandsstreben 35 vorgesehen sind. Innerhalb des unteren Abschlußflansches 8 ist eine Ringdichtung 9 für den Rohrschieber 33 erkennbar.

Oberhalb des Rohrschiebers 33 ist ein Kolben 37 befestigt, im dargestellten Ausführungsbeispiel verschweißt, der mit einer Kolbenringdichtung 38 versehen ist, und der ebenfalls entlang des Innenmantels 14 gleitet. Durch den Rohrschieber 33 und den Kolben 37 ist eine sichere Auf- und Abwärtsbewegung des Rohrschiebers 33 innerhalb des Innenmantels sichergestellt.

Am unteren Rand des Rohrschiebers 33 ist ein äußerer Kegelstumpfmantel 39 und am unteren Ende des Betätigungsrohres 34 ein innerer Kegelstumpfmantel 41 befestigt. Diese beiden Kegelstumpfmäntel bilden unterhalb des Rohrschiebers einen Schüttringkegel, durch welchen das Schüttgut auf eine weiter unten geschilderte Weise während des Schüttvorganges verteilt wird. Die Außenränder der beiden Kegelstumpfmäntel 39 und 41 sind als Umlaufdichtungen 40 und 42 ausgebildet. Sie liegen, wie dieses die in den rechten Teilen der Fig. 1 und 2 dargestellten Schließstellungen erkennen läßt, am Außenmantel 22 der Spülkammer an. Die Fig. 1 und 2 lassen erkennen, daß in dieser Schließstellung der Rohrschieber den Ringspalt mit der Höhe 19 verschließt und daß zudem auch der Schüttringkegel verschlossen ist. Diese Schließstellung ist mit 53 bezeichnet.

In der Schüttstellung 54 hingegen liegt der mit einer Abschrägung 36 versehene Rand am unteren Rand des Schütt-Trichters 7 an und der äußere Kegelstumpfmantel 39 und der innere Kegelstumpfmantel 41 ragen in die Einfüllöffnung 73 des Containers 72 hinein. In dieser Schüttstellung ist, wie dieses die Pfeile andeuten, der Weg frei, um aus dem Bunker durch den Schüttkanal, den Schütt-Trichter 7, den Rohrschieber 33 und den durch die Kegelstumpfmäntel 39 und 41 gebildeten Ringkegel in das Innere des Containers zu gelangen. In dieser Stellung gelangt die Luft, wie dieses die Fig. 2, links, erkennen läßt, durch den Ringbereich der Spülkammer 21 und durch das Entlüftungsrohr 24 aus dem Container heraus.

Der äußere Kegelstumpfmantel 39 ist mit dem Rohrschieber 33 verschweißt Der innere Kegelstumpfmantel 41 hingegen ist mit einer Anschlußplatte 45 verschweißt, die mittels Schrauben 44 an einer Endplatte 43 des Betätigungsrohres 34 befestigt ist.

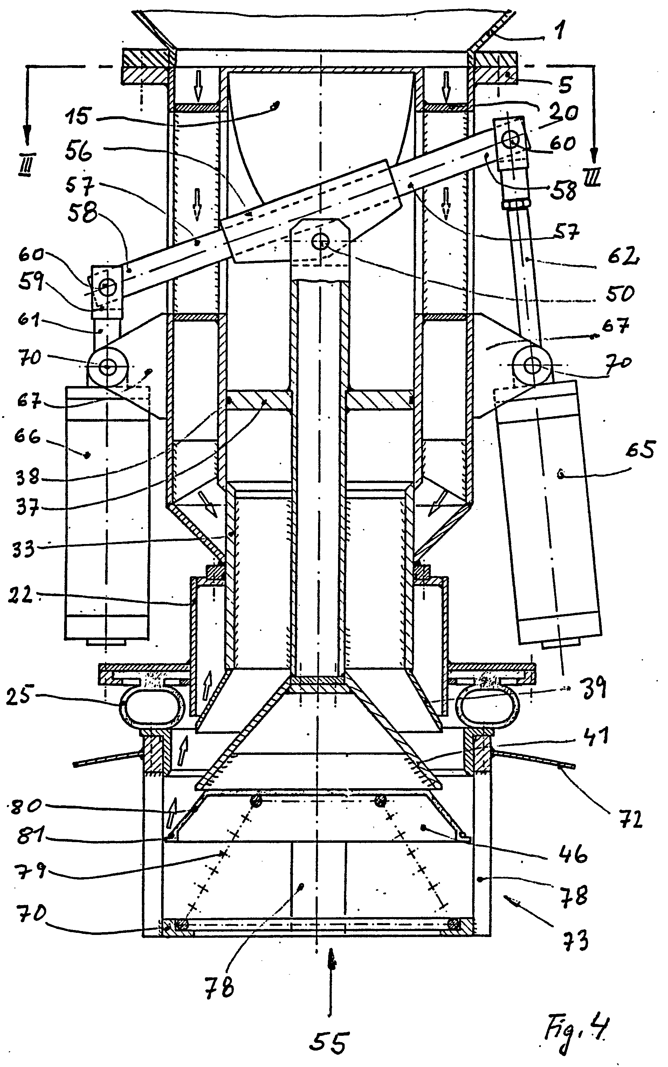

Im unteren Bereich des inneren Kegelstumpfmantels 41 ist wenigstens eine Querstrebe 46 vorgesehen, welche in der Schüttstellung 54 und in der in Fig. 4 dargestellten Spülstellung 55 der Beladeeinrichtung 2 an einer Absperrplatte 80 der Einfüllöffnung 73 anliegt und diese Absperrplatte gegen die Kraft einer Feder 79 öffnet.

Im einzelnen ist der Rand der Einfüllöffnung 73 des Containers mit einem Verstärkungsring 74 versehen, der mittels in den Container 72 hineinragenden Distanzholmen 78 einen Federsitz 77 zur Aufnahme der als Spiralfeder ausgebildeten Feder 79 für die Absperrplatte 80 trägt.

Im dargestellten Ausführungsbeispiel ist der Verstärkungsring 74 mit einem im Querschnitt L-förmigen Einsatz 75 kombiniert. Der in das Innere des Containers hineinragende Innenring weist eine Anfasung auf, gegen die im geschlossenen Zustand der Einfüllöffnung 73 eine Ringdichtung 81 am unteren Rand der Absperrplatte 80 anliegt. Die Stärke der Feder 79 ist so bemessen, daß eine absolut sichere Abdichtung des Containers während des Transportes des Schüttgutes sichergestellt ist. Diese Abdichtung ist deshalb notwendig, um beispielsweise innerhalb des im einzelnen nicht dargestellten Containers (vgl. Patentanmeldung P 37 14 396.4) eine Inertgasatmosphäre aufrechtzuerhalten, oder das gegen Feuchtigkeit oder Atmosphärilien empfindliche Schüttgut zu schützen.

Damit die Absperrplatte 80 ihre sichere Dichtfunktion erfüllen kann, ist sie als nach oben verjüngter Kegelstumpfmantel mit einem oberen Deckel ausgebildet. Die Mantelfläche des Kegelstumpfmantels ist gleichlaufend zur Mantelfläche des inneren Kegelstumpfmantels 41 am Betätigungsrohr 34 geneigt, um ein sicheres Beladen des Containers zu gewährleisten. Der Einsatz 75 kann mittels Schrauben 76 zum Verstärkungsring 74 an der Einfüllöffnung 73 befestigt sein. Damit eine sichere Abdichtung durch den aufblasbaren Dichtungsring 25 ermöglicht wird, sind die Schraubköpfe der Schrauben 76 so ausgebildet, daß eine glatte Dichtungsfläche am oberen Ring des Einsatzes 75 sichergestellt ist.

Im oberen Bereich der Fig. 1 und 4 sind Durchtrittsöffnungen 11 im Außenmantel 4 und Durchtrittsöffnungen 18 im Innenmantel 14 des doppelwandigen Schüttrohres 3 erkennbar. Diese Durchtrittsöffnungen 11 und 18 sind mit Ummantelungen 20 versehen, durch welche eine Abdichtung gegenüber dem Schüttgut innerhalb des Schüttkanales erfolgt.

Am oberen Ende des Betätigungsrohres 34 ist mittels eines Gabelkopfes 48, eines Bolzens 50 und einer Traversenaufnahme 56 eine Traverse 57 befestigt, deren Anlenkenden 58 durch die im doppelwandigen Schuttrohr 3 einander gegenüberliegenden Durchtrittsöffnungen 11 und 18 hindurchragen. An den Anlenkenden sind mittels Gabelköpfen, die aus einer Gabel 59, einem Bolzen 60 und einem Gewindeanschlußstück 61 bestehen, gelenkig Kolbenstangen 62 von Zylindern 65 und 66 angeschlossen. Die Kolbenstangen 62 weisen in an sich bekannter Weise Gewindeenden 63 auf, die in die Gewindeanschlußstücke 61 hineingeschraubt und mit Kontermuttern 64 gesichert sind.

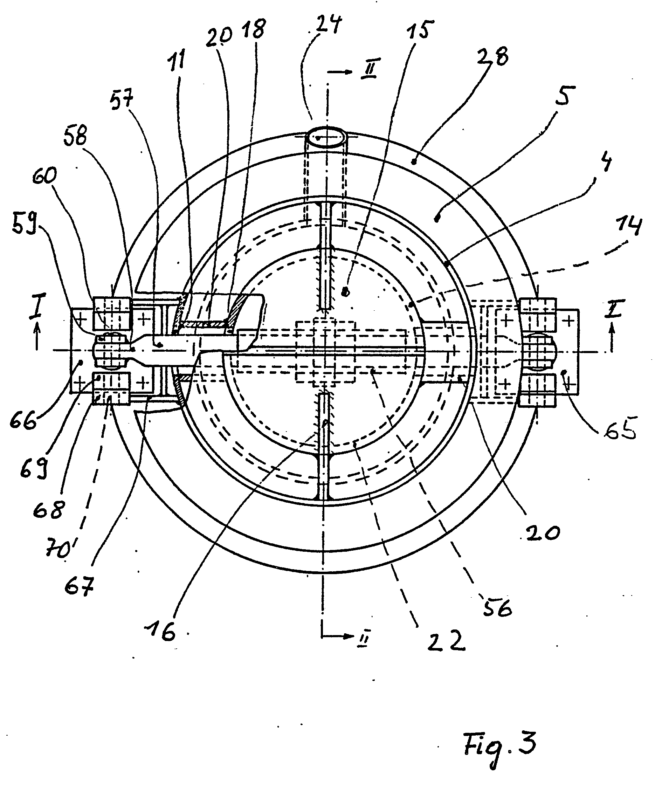

Jeder Zylinder 65, 66 ist, wie dieses vor allem die Fig. 3 erkennen läßt, mittels Augen 68 und Anlenkaugen 69 sowie Bolzen 70 an Schwenkflansche 67 angeschlossen, die eine verschwenkbare Verbindung der Zylinder 65 und 66 mit dem Außenmantel 4 des doppelwandigen Schüttrohres 3 ermöglicht. Die zuvor geschilderten Einzelelemente bilden die insgesamt mit 52 bezeichnete Betätigungsvorrichtung.

Die Fig. 1 und 2 lassen erkennen, daß in der Schließstellung 53 die Kolbenstangen 62 beider Zylinder 65 und 66 ausgefahren sind und sich der Rohrschieber 33 in seiner oberen Position befindet.

In der Schüttstellung 54 hingegen sind die Kolbenstangen 62 der Zylinder 65 und 66 eingefahren, der Rohrschieber 33 befindet sich in seiner unteren Position.

In der in Fig. 4 dargestellten Spülstellung 55 ist die Kolbenstange 62 des Zylinders 66 eingefahren und die Kolbenstange des Zylinders 65 in die obere Position ausgefahren. Hierbei nimmt die Traverse 57 die in Fig. 4 dargestellte geneigte Position an, der Zylinder 65 ist um den Bolzen 70 verschwenkt. Der aufblasbare Dichtungsring 25 ist aufgeblasen und dichtet die Beladevorrichtung 2 gegen die Einfüllöffnung 73 ab. Wie die Fig. 4 erkennen läßt, ist der Rohrschieber 33 in einer Stellung arretiert, in welcher der Ringschlitz 19 versperrt ist, so daß ein Materialfluß aus dem Bunker in den Container 72 nicht erfolgen kann. Hingegen ist der äußere Kegelstumpfmantel 39 noch nicht so angehoben, daß seine Umfangsdichtung 40 am Außenmantel 22 der Spülkammer 21 anliegt. Demnach kann Gas bzw. Luft aus dem Inneren des Containers 72 durch die Spülkammer 21 und das Entlüftungsrohr 24 entweichen. In dieser Position drückt die Querstrebe 46 die Absperrplatte 80 nach unten, diese ist jedoch nicht maximal geöffnet.

Liste der verwendeten Bezeichnungen

1 Auslauftrichter
2 Beladevorrichtung
3 doppelwandiges Schüttrohr
4 Außenmantel
5 oberer Anschlußflansch
6 Schraube
7 Schütt-Trichter, Kegelstumpfmantel
8 unterer Anschlußflansch
9 Dichtung
10 Schraube
11 Durchtrittsöffnung
12
13
14 Innenmantel
15 dachförmige Abdeckung
16 obere Abstandsstrebe
17 untere Abstandsstrebe
18 Durchtrittsöffnung
19 Ringschlitz
20 Ummantelung
21 Spülkammer
22 Außenmantel
23 Anschlußring
24 Entlüftungsrohr

25 aufblasbarer Dichtungsring
26 Haltering
27 Ventil
28 Halterung
29 Schraube
30 äußerer Haltering
31 innerer Haltering
32
33 Rohrschieber
34 Betätigungsrohr
35 Abstandsstrebe
36 Abschrägung
37 Kolben
38 Kolbenringdichtung
39 äußerer Kegelstumpfmantel
40 Umfangsdichtung
41 innerer Kegelstumpfmantel
42 Umfangsdichtung
43 Endplatte
44 Schraube
45 Anschlußplatte
46 Querstrebe
47 Abstand
48 Gabelkopf
49
50 Bolzen
51
52 Betätigungsvorrichtung
53 Schließstellung
54 Schüttstellung
55 Spülstellung
56 Traversenaufnahme
57 Traverse
58 Anlenkende

59, 60, 61 Gabelkopf

59 Gabel
60 Bolzen
61 Gewindeanschlußstück
62 Kolbenstange
63 Gewindeende
64 Kontermutter
65 Zylinder
66 Zylinder
67 Schwenkflansch
68 Auge
69 Anlenkauge
70 Bolzen
71
72 Container
73 Einfüllöffnung
74 Verstärkungsring
75 Einsatz
76 Schraube
77 Federsitz
78 Distanzholm

79 Feder
80 Absperrplatte
81 Ringdichtung

**Ansprüche**

1. An einen Auslauftrichter eines Silos o.dgl. anflanschbare Beladevorrichtung für Container, Tankwagen oder andere Behälter mit einem Rohrschieber, der innerhalb einer Führung von einer Betätigungsvorrichtung in einer den Materialfluß sperrenden Schließstellung und einer den Materialfluß freigebenden Schüttstellung arretierbar ist, dadurch gekennzeichnet,
daß sie unterhalb des Auslauftrichters (1) angeordnet ist,
daß als Führung für den Rohrschieber (33) der Innenmantel (14) eines am Auslauftrichter (1) befestigten doppelwandigen Schüttrohres (3) verwendet wird,
daß durch die Betätigungsvorrichtung (52) der Rohrschieber (33) außer in der Schließstellung (53) und in der Schüttstellung (54) zusätzlich noch in einer Spülstellung (55) arretierbar ist, und
daß das untere Ende des Rohrschiebers (33) als Öffner (41, 46) für eine unter der Wirkung einer Feder (79) verschließbare Absperrplatte (80) einer Einfüllöffnung (73) des Containers (72) o.dgl. ausgebildet ist.

2. Beladevorrichtung nach Anspruch 1, dadurch gekennzeichnet, daß der Durchflußquerschnitt des Schüttkanals des doppelwandigen Schüttrohres (3) durch obere und untere Abstandsstreben (16, 17) zwischen dessen Innenmantel (14) und dem Außenmantel (4) definiert ist.

3. Beladevorrichtung nach den Ansprüchen 1 und 2, dadurch gekennzeichnet, daß an das untere Ende des Außenmantels (4) des doppelwandigen Schüttrohres (3) ein Schütt-Trichter (7) anschließt, dessen unterer Rand den gleichen Innendurchmesser wie der Innenmantel (14) des doppelwandigen Schüttrohres (3) aufweist, und von dessen unterem Rand um die Breite eines Ringschlitzes (19) entfernt ist.

4. Beladevorrichtung nach den Ansprüchen 1 bis 3, dadurch gekennzeichnet, daß der untere Rand des Schütt-Trichters (7) glatt in den Innenmantel eines am Schütt-Trichter befestigten unteren Anschlußflansches (8) übergeht, an dem eine Spülkammer (21) angeflanscht ist.

5. Beladevorrichtung nach Anspruch 4, dadurch gekennzeichnet, daß die Spülkammer (21) aus einem am unteren Anschlußflansch (8) befestigten Anschlußring (23) und einem zylinderförmigen Außenmantel (22) besteht.

6. Beladevorrichtung nach den Ansprüchen 1 bis 5, dadurch gekennzeichnet, daß um den Außenmantel (22) der Spülkammer (21) herum ein Haltering (28) für einen aufblasbaren und über ein Ventil (27) entleerbaren Dichtungsring (25) befestigt ist, der im aufgeblasenen Zustand die Beladevorrichtung (2) gegenüber der Einfüllöffnung (73) eines Containers (72) o.dgl. abdichtet.

7. Beladevorrichtung nach Anspruch 6, dadurch gekennzeichnet, daß der aufblasbare Dichtungsring (25) mit einem Haltering (26) versehen ist, der von einem äußeren Haltering (30) und einem inneren Haltering (31) am Haltering (28) festlegbar ist.

8. Beladevorrichtung nach den Ansprüchen 1 bis 7, dadurch gekennzeichnet, daß der obere Bereich des Innenmantels (14) des doppelwandigen Schüttrohres (3) mit einer dachförmigen Abdeckung (15) staubdicht verschlossen ist.

9. Beladevorrichtung nach Anspruch 8, dadurch gekennzeichnet, daß die Dachkante der dachförmigen Abdeckung (15) in der oder unterhalb der Anschlußebene des oberen Anschlußflansches (5) am doppelwandigen Schüttrohr (3) liegt.

10. Beladevorrichtung nach den Ansprüchen 1 bis 9, dadurch gekennzeichnet, daß der am Innenmantel (14) des doppelwandigen Schüttrohres (3) gleitende Rohrschieber (33) mittels Abstandsstreben (35) an einem koaxial verlaufenden Betätigungsrohr (34) befestigt ist, an welchem oberhalb des Rohrschiebers (33) ein ebenfalls am Innenmantel (14) gleitender Kolben (37) befestigt ist.

11. Beladevorrichtung nach Anspruch 10, dadurch gekennzeichnet, daß der Kolben (37) mit einer Kolbenringdichtung (38) versehen ist.

12. Beladevorrichtung nach den Ansprüchen 1 bis 11, dadurch gekennzeichnet, daß am unteren Rand des Rohrschiebers (33) ein äußerer Kegelstumpfmantel (39) und am Ende des Betätigungsrohres (34) ein innerer Kegelstumpfmantel (41) angeordnet ist, deren Außenränder als Umfangsdichtungen (40, 42) ausgebildet sind, und in der Schließstellung (52) der Beladevorrichtung (2) am Außenmantel (22) der Spülkammer (21) anliegen.

13. Beladevorrichtung nach den Ansprüchen 1 bis 12, dadurch gekennzeichnet, daß in der Schüttstellung (54) des Rohrschiebers (33) sein oberer, mit einer Abschrägung (36) versehener Rand am unteren Rand des Schütt-Trichters (7) anliegt, und der äußere Kegelstumpfmantel (39) und der innere Kegelstumpfmantel (41) in die Einfüllöffnung (73) des Containers (72) hineinragen.

14. Beladevorrichtung nach den Ansprüchen 1 bis 13, dadurch gekennzeichnet, daß das Betätigungsrohr (34) mit einer Endplatte (43) abschließt, an der eine Anschlußplatte (45) des inneren Kegelstumpfmantels (41) befestigt ist.

15. Beladevorrichtung nach den Ansprüchen 1 bis 14, dadurch gekennzeichnet, daß im unteren Bereich des inneren Kegelstumpfmantels (41) wenigstens eine Querstrebe (46) vorgesehen ist, die in der Schüttstellung (54) und in der Spülstellung (55) der Beladevorrichtung (2) an der Absperrklappe (80) der Einfüllöffnung (73) anliegt und die Absperrplatte gegen die Kraft einer Feder (79) öffnet.

16. Beladevorrichtung nach den Ansprüchen 1 bis 15, dadurch gekennzeichnet, daß an das obere Ende des Betätigungsrohres (34) mittels eines Gelenkes (48, 50, 56) eine Traverse (56, 57) angeschlossen ist, die durch im doppelwandigen Schüttrohr (3) einander gegenüberliegenden Durchtrittsöffnungen (11, 18) in den Innen- und Außenmänteln (14, 4) hindurchragen, und deren Anlenkenden (58) gelenkig (59, 60) an die Kolbelstangen (62) von Zylindern (65, 66) angeschlossen sind.

17. Beladevorrichtung nach den Ansprüchen 1 bis 16, dadurch gekennzeichnet, daß die einander gegenüberliegenden Durchtrittsöffnungen (11, 18) im Außenmantel (4) und Innenmantel (14) durch eine dichte Ummantelung (20) miteinander verbunden sind.

18. Beladevorrichtung nach den Ansprüchen 1 bis 17, dadurch gekennzeichnet, daß die Zylinder (65, 66) gelenkig an Schwenkflanschen (67) sitzen, die am Außenmantel (4) des doppelwandigen Schüttrohres (3) befestigt sind.

19. Beladevorrichtung nach den Ansprüchen 1 bis 18, dadurch gekennzeichnet, daß im unteren Anschlußflansch (8) eine Dichtung (9) für den Rohrschieber (33) vorgesehen ist.

20. Beladevorrichtung nach den Ansprüchen 1 bis 19, dadurch gekennzeichnet, daß an die Spülkammer (21) ein Entlüftungsrohr (24) angeschlossen ist.

21. Beladevorrichtung nach den Ansprüchen 1 bis 20, dadurch gekennzeichnet, daß in der Spülstellung (55) der Beladevorrichtung (2) - bei geneigter Traverse (57) - einer der Zylinder (65 oder 66) in seine Sperrstellung (53) und der andere in seine Schüttstellung (54) gestellt ist.

22. Beladevorrichtung nach den Ansprüchen 1 bis 21, dadurch gekennzeichnet, daß der Rand der Einfüllöffnung (73) des Containers (72) mit einem Verstärkungsring (74) versehen ist, an den mittels in den Container (72) hineinragenden Distanzholmen (78) ein Federsitz (77) zur Aufnahme der als Spiralfeder ausgebildeten Feder (79) für die Absperrplatte (80) vorgesehen ist.

23. Beladevorrichtung nach den Ansprüchen 1 bis 21, dadurch gekennzeichnet, daß der Verstärkungsring (74) mit einem im Querschnitt L-förmigen Einsatz (75) kombiniert ist, an dessen Innenring eine Anfasung für eine Ringdichtung (81) am unteren Rand der Absperrplatte (80) vorgesehen ist.

24. Beladevorrichtung nach den Ansprüchen 1 bis 23, dadurch gekennzeichnet, daß die Absperrplatte (80) als nach oben verjüngter Kegelstumpfmantel mit einem oberen Deckel ausgebildet ist, dessen Mantelfläche gleichlaufend zur Mantelfläche des inneren Kegelstumpfmantels (41) am Betätigungsrohr (34) geneigt ist.

EP 0 297 494 A1

Fig. 1

Fig. 2

Fig. 3

Fig. 4

## EINSCHLÄGIGE DOKUMENTE

EP 88110258.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | <u>DE - B2 - 2 249 404</u> (COMPAGNIE GENERALE D'AUTOMATISME) <br> * Fig. 1,3 * <br> ———— | 1 | B 65 G 67/06 |

RECHERCHIERTE SACHGEBIETE (Int. Cl.4)

B 65 G

Der vorliegende Recherchenbericht wurde für alle Patentansprüche erstellt.

| Recherchenort | Abschlußdatum der Recherche | Prüfer |
|---|---|---|
| WIEN | 09-09-1988 | PISSENBERGER |